# EUROPÄISCHE PATENTSCHRIFT

(11) **EP 2 846 030 B1**
(45) Veröffentlichungstag und Bekanntmachung des Hinweises auf die Patenterteilung: **16.11.2016**
(21) Anmeldenummer: 14179329.9
(22) Anmeldetag: 31.07.2014
(51) Int. Cl.: F02K 1/44, F02K 1/82, F02C 7/045, F02C 7/24, G10K 11/172

(54) **Schallabsorberanordnung**
Sound absorber assembly
Système d'absorbeur acoustique

(30) Priorität: 30.08.2013 DE 102013109492
(43) Veröffentlichungstag der Anmeldung: 11.03.2015
(73) Patentinhaber: Airbus Defence and Space GmbH, 85521 Ottobrunn (DE); Rolls-Royce Deutschland Ltd & Co KG, 15827 Blankenfelde-Mahlow (DE)
(72) Erfinder: Pongratz, Reinhard, 82024 Taufkirchen (DE); Richter, Christoph, 12157 Berlin (DE); Kern, Max, 72622 Nürtingen (DE); Redmann, Daniel, 85567 Grafing b. München (DE)
(74) Vertreter: Kastel, Stefan

(56) Entgegenhaltungen:
- EP-A2- 2 605 238
- WO-A1-2005/100753
- GB-A- 1 470 036
- US-A- 3 479 779
- US-A- 3 887 031
- US-A- 5 760 349

## Beschreibung

Die Erfindung betrifft einen Schallabsorber, insbesondere für ein Triebwerk eines Luftfahrzeugs, der einen Grundkörper und eine mit dem Grundkörper verbundene Zunge umfasst. Ferner betrifft die Erfindung eine Schallabsorberanordnung, die wenigstens zwei der zuvor genannten Schallabsorber umfasst. Schließlich ist die Erfindung auf ein Triebwerk, insbesondere für ein Luftfahrzeug, gerichtet, der einen solchen Schallabsorber und/oder eine solche Schallabsorberanordnung umfasst.

Schallabsorber werden vorgesehen, um auftretende Geräusche zu absorbieren, und werden unter anderem bei Triebwerken von Luftfahrzeugen verwendet, um störende Geräusche, die vom Triebwerk erzeugt werden, zu minimieren. Dies erhöht einerseits den Komfort für Passagiere und reduziert die Schallbelästigung für die Umwelt. Andererseits können Schallquellen unerwünschte Resonanzen erzeugen, die sich mittels Schallabsorber minimieren lassen. Um eine möglichst effiziente Schallabsorption bereitzustellen, sollen die Schallabsorber breitbandig Schall absorbieren.

US 5 760 349 A offenbart ein Schallabsorber, der eine quaderförmige Grundstruktur hat, in die ein trichterförmiges Trennelement eingebaut ist. In US 3 831 710 wird ein Schallabsorptionspaneel beschrieben. DE 10 2011 008 920 A1 und DE 25 06 472 A1 zeigen ebenfalls Schallabsorber mit einem trichterförmigen Trennelement. US 6 122 892 A1 und US 7 401 952 B2 offenbaren Schallabsorber, die zur Schallabsorber einen Helmholtz-Resonator verwenden. EP 2 205 238 A2 offenbart einen akustischen Absorber, bei dem ein Trichterelement eine Wabenstruktur eingebracht ist, um zwei voneinander getrennte Teilräume bereitzustellen. Auch US 3 887 031 und WO 2005/100753 A1 offenbaren Schallabsorber, bei denen Teilräume durch ein trichterförmiges Element voneinander getrennt sind.

Aufgabe der Erfindung ist es, einen verbesserten Schallabsorber bereitzustellen.

Die Aufgabe wird durch den Schallabsorber nach Anspruch 1, durch die Schallabsorberanordnung nach Anspruch 5 sowie durch das Triebwerk nach Anspruch 14 gelöst.

Die Ansprüche 2 bis 5 sowie 7 bis 14 beschreiben bevorzugte Ausführungsformen.

Der Schallabsorber, insbesondere für ein Triebwerk eines Luftfahrzeugs, umfasst einen Grundkörper und eine Zunge. Der Grundkörper weist eine Bodenplatte, eine die Bodenplatte einfassende Wandung und eine den Eintritt von Luft in den Grundkörper ermöglichende Öffnung auf. Die Zunge weist ein festes Ende, ein freies Ende und einen Mittenbereich, der zwischen dem festen Ende und dem freien Ende angeordnet ist, auf. Die Zunge hat ferner eine Längsrichtung, die sich von dem festen Ende zu dem freien Ende hin erstreckt, eine Breitenrichtung, die sich im Wesentlichen senkrecht zu der Längsrichtung erstreckt, und eine Querrichtung, die sich im Wesentlichen senkrecht zur Längsrichtung und senkrecht zu der Breitenrichtung erstreckt. Die Zunge teilt den Raum des Grundkörpers in einen der Bodenplatte benachbarten Teilraum und einen der Öffnung benachbarten Teilraum. Die beiden Teilräume sind durch den Spalt miteinander verbunden. Das feste Ende der Zunge ist mit der Wandung verbunden. Das freie Ende ist in der Querrichtung in einem ersten Abstand zu der Wandung und in der Längsrichtung in einem zweiten Abstand zu der Bodenplatte angeordnet. Der erste und der zweite Abstand bestimmen die Größe des Spalts. Der Mittenbereich der Zunge ist entlang der Breitenrichtung wenigstens teilweise gerade verlaufend ausgestaltet.

Unter einem Luftfahrzeug kann jedes Fahrzeug verstanden werden, das in der Lage ist zu fliegen. Beispielsweise kann ein Luftfahrzeug ein Flugzeug oder ein Helikopter sein. Das Triebwerk ist vorzugsweise eine Einrichtung, die zum Antrieb des Luftfahrzeugs dient. Dies kann ein Jettriebwerk und/oder ein Propellertriebwerk sein. Der Schallabsorber kann an oder in dem Triebwerk angeordnet sein. Ferner kann der Schallabsorber auch an oder in der Nähe von verschiedensten Vorrichtungen angebracht sein, die ungewünschten Schall erzeugen. Im Hinblick auf das Luftfahrzeug kann der Schallabsorber auch an oder in der Nähe von rotierenden Vorrichtungen oder Auslässen für Luft, beispielsweise ein Abgasauslass, vorgesehen sein.

Die Wandung berührt vorzugsweise die Bodenplatte und steht von der Bodenplatte hervor, so dass die Bodenplatte und die Wandung einen Halbraum einschließen. Der Halbraum steht über die Öffnung vorzugsweise mit der Umgebung in Verbindung, so dass durch die Öffnung Luft von der Umgebung in den Halbraum des Grundkörpers oder umgekehrt sich bewegen kann. Die Öffnung kann als ein oder mehrere Löcher ausgeführt sein und ist vorzugsweise der Bodenplatte gegenüberliegend angeordnet.

Die Wandung hat insbesondere einen ersten Randabschnitt, der mit der Bodenplatte in Berührung steht, und einen zweiten Randabschnitt, der die Öffnung umschließt. Die Öffnung ist demnach insbesondere über die Wandung von der Bodenplatte beabstandet. Die Wandung kann mehrere Seitenwände aufweisen, die vorzugsweise an den jeweiligen Seiten der Bodenplatte angeordnet sind.

Die Zunge ist mit dem festen Ende mit der Wandung, insbesondere einer Seitenwand der Wandung, verbunden. Die Verbindung kann über einen Befestigungsabschnitt hergestellt werden. Die Zunge definiert eine Längsrichtung, die von dem festen Ende zu dem freien Ende verläuft. Das freie Ende ist in der Querrichtung in einem ersten Abstand zu der Wandung, insbesondere zu einer dem freien Ende am nächsten liegenden Seitenwand, beabstandet. Ferner verläuft das freie Ende in der Längsrichtung in einem zweiten Abstand zu der Bodenplatte. Dies bedeutet vorzugsweise, dass das freie Ende in der Längsrichtung und in der Querrichtung einen Spalt zwischen sich und dem Grundkörper bildet.

Die Zunge teilt den Raum des Grundkörpers in einen der Bodenplatte benachbarten Teilraum und einen der Öffnung benachbarten Teilraum. Die beiden Teilräume sind durch den Spalt miteinander verbunden, so dass Luft von der Umgebung über die Öffnung in den der Öffnung benachbarten Teilraum strömen kann. Weiter kann die Luft über den Spalt in den der Bodenplatte benachbarten Teilraum strömen.

Der Mittenbereich der Zunge ist entlang der Breitenrichtung wenigstens teilweise gerade verlaufend angeordnet. Vorzugsweise ist die Zunge über die gesamte Breitenrichtung gerade angeordnet. Gerade soll in diesem Zusammenhang nicht gebogen oder planar bedeuten. Vorzugsweise ist daher die Zunge lediglich entlang der Längsrichtung und nicht entlang der Breitenrichtung gebogen. Dadurch kann die Herstellung der Zunge vereinfacht werden, da die Zunge nur in eine Richtung gebogen werden muss.

Die Wirkung des Schallabsorbers folgt der Wirkungsweise eines HelmholtzResonators und/oder des λ/4-Resonators. Durch Wahl der Form und der Größe der Zunge können die Volumina der beiden Teilräume unterschiedlich gewählt werden. Entsprechend den Volumina der Teilräume ergeben sich Eigenfrequenzen der darin schwingenden Luftmassen. Zudem lässt sich über die Form und die Länge der Zunge die Ausdehnung des Spalts bestimmen, die zusammen mit den Volumina der beiden Teilräume die Eigenfrequenz und damit die Absorptionsfrequenzen des Helmholtz-Absorbers festlegt. Dies bedeutet, dass sich die Absorptionsfrequenzen des Schallabsorbers über die Form und die Länge der Zunge an den zu absorbierenden Schall anpassen lassen. Durch die in Breitenrichtung gerade Ausgestaltung der Zunge lässt sich dieser Anpassungsschritt besonders einfach durchführen, da ein Biegungs- oder Formungsschritt in dieser Richtung nicht notwendig ist.

Ferner kann im Bereich der Öffnung eine Deckschicht vorgesehen sein, die luftdurchlässig ist. Die Deckschicht wirkt zusammen mit der Zunge als λ/4-Absorber. Daher ist es möglich, über die Wahl der Form und der Länge der Zunge die von dem λ/4-Absorber absorbierten Schallfrequenzen einzustellen.

Es ist bevorzugt, dass die Bodenplatte trapezförmig, insbesondere rechteckig ist.

Eine trapezförmige, insbesondere rechteckige oder quadratische, Ausgestaltung der Bodenplatte ermöglicht, dass mehrere Schallabsorber derart zueinander benachbart angeordnet werden können, dass sie eine Fläche vollständig abdecken. Dies bedeutet, dass bei der Verwendung von mehreren Schallabsorbern sich keine Lücken zwischen den einzelnen Schallabsorbern aufgrund der Form des Schallabsorbers ergeben. Diese Lücken würden dann nicht zur Schallabsorption beitragen, so dass sich der Wirkungsgrad der Schallabsorber vermindern würde. Die Fläche, an der die Schallabsorber angeordnet sind, lässt sich somit optimal zum Absorbieren von Schall nutzen. In dieser Hinsicht eignen sich auch für die Ausgestaltung der Bodenplatte eine Dreiecks- oder eine Sechsecksform, da auch mit drei Ecken und sechs Ecken sich eine Fläche komplett abdecken lässt.

Es ist bevorzugt, dass die Zunge entlang der Längsrichtung gebogen ist, insbesondere in Form eines Parabelasts, einer Exponentialfunktion oder einer Hyperbel.

Die Biegung oder Krümmung der Zunge entlang der Längsrichtung ermöglicht es, die Teilräume so anzupassen, dass sie die gewünschten Eigenfrequenzen im Hinblick auf die zu absorbierenden Schallfrequenzen aufweisen. Ferner lassen sich mittels der Krümmung in Längsrichtung der Zunge die Abstände zu der Deckschicht so variieren, dass die Absorptionen des λ/4-Absorbers breitbandig absorbieren. Die Biegung der Zunge ermöglicht es ferner, dass tieffrequente Geräusche von dem Schallabsorber absorbiert werden. Als geeignete Biegungen haben sich die Form eines Parabelasts, einer Exponentialfunktion oder einer Hyperbel erwiesen. Dies bedeutet, dass die Zunge im Querschnitt senkrecht zu der Breitenrichtung einem Parabelast, einer Exponentialfunktion oder einer Hyperbel folgt.

Es ist bevorzugt, dass das freie Ende in der Längsrichtung gekrümmt ist.

Insbesondere ist das freie Ende von dem Bereich der Wandung, der dem freien Ende in der Querrichtung am nächsten ist, weg weisend gekrümmt. Das heißt beispielsweise, dass das freie Ende ist von der Seitenwand der Wandung, die dem freien Ende am nächsten ist, also in dem ersten Abstand beabstandet ist, weg weisend gekrümmt ist. Vorzugsweise ist der Bereich des freien Endes, der gekrümmt ist, wenigstens bereichsweise im Wesentlichen parallel zu der Querrichtung und/oder der Bodenplatte angeordnet.

Die Form der Krümmung kann rund, eckig oder spitzwinklig sein. Je nach Ausgestaltung der Krümmung auch im Hinblick auf den ersten und zweiten Abstand kann das Resonanzverhalten des Helmholtz-Absorbers verändert werden. Der erste und der zweite Abstand bestimmen die Größe des Spalts, die für das Absorptionsverhalten des Helmholtz-Resonators von Bedeutung ist. Je nach Größe des Spalts ergibt sich ein Absorptionsverhalten bei unterschiedlichen Frequenzen. Dies bedeutet, dass das Absorptionsverhalten des Schallabsorbers durch eine entsprechende Wahl des ersten und zweiten Abstands an die auftretenden Geräusche angepasst werden kann. Auch der Radius der Krümmung des freien Endes hat auf das Absorptionsverhalten des Helmholtz-Absorbers Einfluss.

Da die Zunge, wenn überhaupt, lediglich in Längsrichtung, aber nicht in Breitenrichtung gebogen ist, kann der erste und zweite Abstand durch Variieren der Länge der Zunge in Längsrichtung und der Biegung der Zunge in Längsrichtung besonders einfach eingestellt werden. Es hat sich gezeigt, dass eine runde, bauchige Ausformung des freien Endes zu einer tieffrequenteren, aber auch schmalbandigeren Absorption führt. Eine scharfkantige Form der Biegung des freien Endes führt zu einem hohen Durchströmwiderstand bei hohen Pegeln, das heißt eine eher hochfrequente und breitbandigere Absorption.

Je nach Frequenz der zu absorbierenden Geräusche, kann die Biegung des freien Endes zwischen einer bauchigen und einer spitzen Form im Zusammenspiel mit dem Volumen der beiden Halbräume derart gewählt oder variiert werden, dass die Absorption an das auftretende Geräusch angepasst werden kann. Ferner ist es möglich, zusätzlich öder alternativ zu der Biegung des freien Endes das freie Ende zu verdicken, beispielsweise in Tropfenform. Dies kann dazu beitragen, den ersten und den zweiten Abstand zu variieren.

Es ist bevorzugt, dass die Zunge in der Längsrichtung und in der Querrichtung eine Biegung aufweist.

Die Biegung in der Längsrichtung wird vorzugsweise von dem Mittenbereich bereitgestellt, während die Biegung in der Querrichtung von dem freien Ende bereitgestellt wird. Dadurch ergibt sich insbesondere die oben beschriebene Ausgestaltung der Zunge.

Es ist bevorzugt, dass die Zunge aus Metall, insbesondere Blech, Kohlefaser und/oder keramischen Kompositmaterialien gefertigt ist.

Diese Materialien haben sich als geeignet für die Ausgestaltung der Zunge herausgestellt. Insbesondere bei einer Verwendung des Schallabsorbers in einem Triebwerk sind die Materialien großen Temperaturschwankungen ausgesetzt, denen der Schallabsorber widerstehen muss. Die oben genannten Materialien haben sich als dafür geeignet erwiesen. Insbesondere die Verwendung von Blech eignet sich besonders gut, um die Zunge an die verschiedenen Absorptionsfrequenzen anzupassen, da Blech besonders einfach formbar ist. Es hat sich zudem herausgestellt, dass das Material der Zunge für die Absorptionswirkung des Schallabsorbers nicht entscheidend ist.

Der Grundkörper kann aus dem gleichen Material oder einem anderen Material wie die Zunge gefertigt sein. Insbesondere, wenn die Zunge aus Blech gefertigt ist, ist der Grundkörper aus einem Material hergestellt, das eine größere Biegesteifigkeit als Blech aufweist. Das Material des Grundkörpers hält insbesondere hohen Temperaturen, beispielsweise wie sie in Triebwerken auftreten, stand.

Zumindest der Mittenbereich weist zwei sich in der Längsrichtung erstreckende Seitenbereiche auf, wobei die Seitenbereiche dicht mit der Wandung verbunden sind und vorzugsweise die Seitenbereiche an der Wandung angeschweißt sind.

Die Seitenbereiche erstrecken sich vorzugsweise entlang des Mittenbereichs, insbesondere entlang der gesamten Zunge, das heißt von dem festen Ende über den Mittenbereich bis zum freien Ende. Die Seitenbereiche liegen dicht an der Wandung an, so dass die Teilräume vorzugsweise nur über den Spalt miteinander in Verbindung stehen. Dies bedeutet, dass "dicht" in diesem Zusammenhang insbesondere luftdicht bedeutet. Dies wird in einer bevorzugten Ausgestaltung durch Verschweißen der Zunge an den Seitenbereichen mit der Wandung erreicht.

Es ist bevorzugt, dass der Schallabsorber eine Deckschicht aufweist, die die Öffnung abdeckt, wobei vorzugsweise die Deckschicht aus einem-perforierten Metall, insbesondere aus einem µ-perforierten Metal, und/oder aus einem Gewebe gefertigt ist.

Die Deckschicht ist luftdurchlässig, so dass Schall von der Umgebung in den Raum des Grundkörpers eindringen kann und mit der Zunge einen λ/4-Absorber bilden kann, so wie dies dem Fachmann bekannt ist. Die Luftdurchlässigkeit der Deckschicht wird beispielsweise durch eine Perforierüng erreicht. Als Material ist insbesondere Metall vorgesehen. Die Lochgröße der Perforation ist vorzugsweise kleiner als 0,2 mm. Die Dicke der Deckschicht, das heißt die Ausdehnung der Deckschicht senkrecht zur Breitenrichtung und senkrecht zur Querrichtung, ist vorzugsweise zwischen 0,5 mm und 1,5 mm. Alternativ oder zusätzlich kann die Luftdurchlässigkeit der Deckschicht durch ein Gewebe bereitgestellt werden, das porös ist. Die Porosität ist dabei vorzugsweise zwischen 3 % und 15 %.

Die Erfindung betrifft ferner eine Schallabsorberanordnung, insbesondere für ein Triebwerk eines Luftfahrzeugs, die wenigstens zwei Schallabsorber, so wie sie oben beschrieben wurden, umfasst.

Die im Hinblick auf den Schallabsorber gemachten Bemerkungen im Hinblick auf bevorzugte Ausführungsformen und bevorzugte Wirkungen gelten auch für die Schallabsorberanordnung.

Die Bodenplatten der einzelnen Schallabsorber der Schallabsorberanordnung sind insbesondere durch eine einzige, einstückige Bodenplatte ausgebildet. Dies vereinfacht vorteilhafterweise die Herstellung.

Es ist bevorzugt, dass die wenigstens zwei Schallabsorber in Querrichtung und/oder in Breitenrichtung hintereinander angeordnet sind, wobei vorzugsweise die Wandung wenigstens bereichsweise mit der Bodenplatte wenigstens bereichsweise einen Winkel ungleich 90° einschließt.

Bei einer Anordnung der Schallabsorber hintereinander in der Querrichtung und/oder in der Breitenrichtung kann eine vollständige Abdeckung einer Fläche besonders einfach erreicht werden. Dies gilt insbesondere, wenn die Bodenplatte der Schallabsorber rechteckig ist. Beispielsweise sind die Schallabsorber in einer Reihe hintereinander in der Querrichtung oder in der Breitenrichtung angeordnet.

Falls die Fläche, die mit den Schallabsorbern der Schallabsorberanordnung abgedeckt werden soll, nicht eben, sondern beispielsweise gebogen ist, ist bevorzugt, dass die Wandung gegenüber der Bodenplatte wenigstens bereichsweise einen Winkel ungleich 90° einschließt. Insbesondere sollen Seitenwände des Grundkörpers, die senkrecht zu einer Krümmungsrichtung der mit den Schallabsorbern abzudeckenden Fläche angeordnet sind, gegenüber der Bodenplatte so geneigt sein, dass sich zwischen den einzelnen Schallabsorbern keine Lücken bilden. Bei einer solchen Ausgestaltung können die Grundkörper konusförmig sein. Das heißt, die Seitenwände der Wandung sind insbesondere derart angeordnet, dass die Fläche der Öffnung kleiner oder größer als die Fläche der Bodenplatte ist.

Beispielsweise, wenn die Schallabsorber an der Innenseite eines Rohrs angeordnet sind, sind die Seitenwände der Wandung, die senkrecht zu der Umfangsrichtung angeordnet sind, gegenüber der Bodenplatte um einen Winkel < 90° geneigt, so dass die einzelnen Schallabsorber in der Umfangsrichtung lückenlos angeordriet werden können. Durch eine lückenlose Anordnung kann die ganze Fläche zur Schallabsorption genutzt werden. Zudem lässt sich durch eine Anordnung der Wandung gegenüber der Bodenplatte in einem Winkel ungleich 90° eine Fläche abdecken, die in zwei Richtungen gebogen ist.

Die Neigung der Wandung gegenüber der Bodenplatte kann nicht zuletzt deswegen einfach realisiert werden, da die Zunge in der Breitenrichtung gerade ist, so dass sich die Zunge auch in einen könusförmigen Grundkörper einfach einbauen lässt.

Sind auch die Seitenwände der Wandung, die mit den Seitenbereichen der Zunge verbunden sind, gegenüber der Wandung um einen Winkel ungleich 90° angeordnet, lässt sich die Zunge beispielsweise mittels Laserschneidens zuschneiden.

Auch das Zuschneiden und das Einfügen lassen sich besonders einfach durchführen, da die Zunge in der Breitenrichtung gerade ist.

Es ist bevorzugt, dass die Zunge mittels eines Befestigungsabschnitts mit der Wandung verbunden ist, wobei vorzugsweise die Öffnung eine Ebene definiert und wobei weiter vorzugsweise sich der Befestigungsabschnitt in der Ebene der Öffnung über eine Fläche erstreckt, die weniger als 10 %, insbesondere weniger als 5 %, der Ausdehnung der Öffnung misst.

Mit Hilfe des Befestigungsabschnitts kann die Zunge besonders einfach an den Grundkörper befestigt werden. Dabei kann der Befestigungsabschnitt in die Öffnung hineinragen. Vorzugsweise ist die Fläche, die der Befestigungsabschnitt in der Ebene der Öffnung einnimmt, weniger als 10 %, insbesondere weniger als 5 %, der Fläche der Öffnung. Der Befestigungsabschnitt verringert somit die Ausdehnung der Öffnung und damit die wirksame Fläche des Schallabsorbers. Demnach ist es besonders bevorzugt, die Fläche des Befestigungsabschnitts, die dieser in der Öffnung einnimmt, möglichst klein auszugestalten.

Alternativ ist bevorzugt, dass die Zunge keine Befestigungsstege aufweist. In diesem Fall sind vorzugsweise die Zunge oder die Zungen der Schallabsorberanordnung direkt an der Wandung angebracht.

Es ist bevorzugt, dass an einem Befestigungsabschnitt wenigstens zwei Zungen angeordnet sind, die in wenigstens zwei Grundkörper hineinragen.

Dies bietet den Vorteil, dass zwei Zungen zweier benachbarter Grundkörper an einem Befestigungsabschnitt angebracht sind, so dass sich die beiden Zungen in einem Montageschritt befestigen lassen. Dies stellt eine besonders einfache und schnelle Befestigungsart dar.

Diese Wirkung kann erhöht werden, falls an einem Befestigungsabschnitt mehr als zwei Zungen angeordnet sind. Dies kann beispielsweise dadurch realisiert werden, dass an zwei Seiten des Befestigungsabschnitts in einer Richtung zueinander beabstandet mehrere Zungen angeordnet sind, die in Grundkörper, die parallel zu der Längsausdehnung des Befestigungsabschnitts in zwei Reihen angeordnet sind, eingeführt werden.

Es ist bevorzugt, dass die Bereiche von Wandungen zweier Schallabsorber, die aneinander angrenzen, durch eine gemeinsame Wandung gebildet werden.

Bei zwei Schallabsorbern, die wie in der bevorzugten Ausführungsform lückenlos benachbart zueinander angeordnet sind, grenzen benachbarte Wandungen, insbesondere benachbarte Seitenwände zweier Grundkörper, aneinander an. In der bevorzugten Ausführungsform werden diese aneinander angrenzenden Bereiche der Wandungen oder diese Seitenwände durch eine Wandung oder Seitenwand ersetzt, so dass sich dadurch Platz und Gewicht sparen lassen. Bevorzugt geschieht dies nicht nur auf einer Seite des Grundkörpers, sondern auf mehreren, so dass sich dadurch eine Art Wabe ergibt, die die Wandung der einzelnen Grundkörper bereitstellt.

Es ist bevorzugt, dass die Zungen zweier Schallabsorber an der gemeinsamen Wandung angebracht sind, wobei vorzugsweise die gemeinsame Wandung eine Aussparung aufweist.

Die Zungen zweier benachbarter Schallabsorber sind vorzugsweise an der gemeinsamen Wandung auf gleicher Höhe angebracht. Insbesondere sind die Zungen so angeordnet, dass sie in entgegen gesetzten Richtungen von der gemeinsamen Wandung vorstehen, sodass sich vorzugsweise eine an der gemeinsamen Wandung spiegelbildliche Anordnung der Zungen ergibt. Ein Bereich der Deckschicht, der sich in unmittelbarer Umgebung zu der gemeinsamen Wandung befindet, kann zusätzlich oder alternativ zur Befestigung der Zungen an der Deckschicht dienen. Die an der gemeinsamen Wandung angebrachten Zungen können einstückig ausgebildet. Beispielsweise können die Zungen am Rand der Aussparung angebracht sein.

Vorzugsweise beträgt die Größe der Ausdehnung der Aussparung im Vergleich zur flächigen Ausdehnung der gemeinsamen Wandung zwischen 50 % und 100 %. Dies bedeutet, dass die Aussparung derart groß sein kann, dass eine gute Luftverbindung zwischen beiden Schallabsorbern über die Aussparung möglich ist. Die beiden zweiten Teilräume, die sich unterhalb der jeweiligen Zungen der jeweiligen Schallabsorber befinden, können somit einen gemeinsamen Teilraum bilden. Beispielsweise kann die gemeinsame Wandung fast vollständig weggelassen werden, das heißt die Größe der Ausdehnung der Aussparung ist nahe an 100% der Ausdehnung der gemeinsamen Wandung, sodass sich dadurch Material einsparen lässt. Beispielsweise kann ein die gemeinsame Wandung im Bereich der Zungen bis auf einen kleinen Steg reduziert werden. Dies bietet den Vorteil, dass bei der so ausgebildeten Schallabsorberanordnung eine Wand eingespart werden kann.

In einer Ausführungsform sind mehrere Aussparungen in der gemeinsamen Wandung vorgesehen. Die Ausdehnung aller Aussparungen zusammen können wieder zwischen 50 % und 100 % der Ausdehnung der gemeinsamen Wandung entsprechen.

Es ist bevorzugt, dass die Stelle, an der wenigstens eine der Zungen an der gemeinsamen Wandung angebracht ist, die gemeinsame Wandung in einen ersten Abschnitt, der zu der Öffnung benachbart ist, und einen zweiten Abschnitt, der zu der Bodenplatte benachbart ist, teilt, wobei der zweite Abschnitt die Aussparung aufweist, wobei vorzugsweise die Aussparung den gesamten zweiten Abschnitt umfasst.

In dieser bevorzugten Ausführungsform sind die Zungen nicht unmittelbar benachbart zu der Deckschicht angeordnet, sondern von dieser beabstandet. Die Stelle, die bevorzugt eine lineare Ausdehnung hat und an welcher die Zunge an der gemeinsamen Wandung angebracht ist, teilt die gemeinsame Wandung in einen ersten, oberen Abschnitt und einen zweiten unteren Abschnitt. Bevorzugt ist die Aussparung in dem zweiten Abschnitt angeordnet. Insbesondere ist die Ausdehnung der Aussparung so groß wie die Ausdehnung des zweiten Abschnitts, das heißt die gemeinsame Wandung umfasst nur den Bereich des ersten Abschnitts. Somit lässt sich bei dieser bevorzugten Anordnung der Schallabsorberanordnung Material im Bereich des zweiten Abschnitts komplett einsparen. Weiter bevorzugt ist der erste Abschnitt als ein Steg ausgebildet, besonders in dem Fall, in dem die Zungen nahe an der Deckschicht angeordnet sind. Auch hier ergibt sich wieder ein zweiter Teilraum, der sich über zwei Schallabsorber der Schallabsorberanordnung erstrecken.

Ein Aspekt der Erfindung betrifft ein Verfahren zum Herstellen der oben beschriebenen bevorzugten Schallabsorberanordnung. Das Verfahren umfasst die folgenden Schritte: Zusammenfügen einer Bodenplatte, wenigstens zwei erster gemeinsamer Wandungen und wenigstens zwei zweiter gemeinsamer Wandungen eines Stegs, welcher dem ersten Abschnitt entspricht, einer Zunge und einer Deckplatte. Der zweite Schritt umfasst das Zusammenschweißen der zusammengefügten oben beschriebenen Teile.

Vorzugsweise weist die erste gemeinsame Wandung erste Einschnitte und die zweite gemeinsame Wandungen zweite Einschnitte auf, sodass diese gemeinsamen Wandungen zusammengesteckt werden können. Weiter vorzugsweise weist die zweite gemeinsame Wandungen dritte Einschnitte auf, in welche die Zungen eingeschoben werden können. Noch weiter vorzugsweise weisen die zweiten gemeinsamen Wandungen vierte Einschnitte auf, in welche die Stege eingesteckt werden können.

Es ist bevorzugt, dass eine Vielzahl von Schallabsorbern vorgesehen ist, die in Form eines Rohres, das eine Radialrichtung, eine Umfangsrichtung und eine Axialrichtung aufweist, angeordnet sind, wobei vorzugsweise die Öffnung der Schallabsorber in der Radialrichtung nach innen weist, wobei weiter vorzugsweise der Befestigungsabschnitt in der Umfangsrichtung oder in der Axialrichtung angeordnet ist.

Die Anordnung der Schallabsorber in Form eines Rohres eignet sich besonders, in einem Triebwerk angeordnet zu werden. Wie bereits oben beschrieben, ist vorzugsweise die Wandung gegenüber der Bodenplatte geneigt, so dass die ebene Fläche des Rohrs vollständig/lückenlos von den Öffnungen der einzelnen Schallabsorber abgedeckt ist.

Weiter vorzugsweise sind die Zungen an einem Befestigungsabschnitt angebracht, der entweder in Umfangsrichtung oder in Axialrichtung verläuft. Dadurch lässt sich besonders einfach eine Befestigung der Zunge erreichen. Bei einer Anordnung des Befestigungsabschnitts in Umfangsrichtung lassen sich besonders einfach Drainageöffnungen zur Abführung von Wasser, insbesondere Kondenswasser, in dem Grundkörper anordnen. Im Hinblick auf die Absorptionswirkung ergeben sich bei einer Anordnung des Befestigungsabschnitts in Umfangsrichtung oder in Axialrichtung keine nennenswerten Unterschiede.

Es ist bevorzugt, dass zwischen den Grundkörpern entlang der Befestigungsabschnitts der Zunge und/oder entlang der Bodenplatte, insbesondere in der Umfangsrichtung, eine Drainageöffnung angelegt ist.

Mit Hilfe der Drainageöffnung kann Flüssigkeit, wie beispielsweise Kondenswasser oder Kerosin, aus dem Grundkörper abgeleitet werden, so dass Flüssigkeitsansammlungen, die eventuell die Funktionsfähigkeit der Schallabsorberanordnung oder des Schallabsorbers beeinträchtigen kann, in dem Grundkörper vermieden werden können. Insbesondere bei einer rohrförmigen Schallabsorberanordnung ist die Drainageöffnung in der Umfangsrichtung angeordnet.

Die Drainageöffnung kann ein oder mehrere Löcher umfassen, die jeweils eine Verbindung zwischen dem Halbraum in dem Grundkörper und der Umgebung herstellen. Insbesondere kann die Drainageöffnung durch ein Loch bei einem Schallabsorber bereitgestellt werden.

Die Erfindung betrifft ferner ein Triebwerk, insbesondere für ein Luftfahrzeug, das einen Schallabsorber, wie er oben beschrieben wurde, und/oder eine Schallabsorberanordnung, wie sie oben beschrieben wurde, umfasst.

Auch hier gelten die oben angestellten Bemerkungen und Überlegungen.

Der Schallabsorber oder die Schallabsorberanordnung wird vorzugsweise in einem Abgaskonus des Triebwerks, im Triebwerkseinlauf, im Nebenstromkanal, der gemischten Düse und/oder im Triebwerkskern vorgesehen. Insbesondere tieffrequente Geräusche sollen mittels des Schallabsorbers und der Schallabsorberanordnung absorbiert werden.

Im Folgenden wird die Erfindung anhand von Ausführungsbeispielen näher charakterisiert. In den schematische Zeichnungen zeigen:
- Fig. 1: eine Seitenansicht eines Luftfahrzeugs;
- Fig. 2: einen Querschnitt durch einen Schallabsorber;
- Fig. 3: einen Querschnitt durch Schallabsorber mit unterschiedlichen Zungen;
- Fig. 4: einen Querschnitt durch eine Schallabsorberanordnung;
- Fig. 5: eine Querschnittsansicht einer weiteren Ausführungsform der Schallabsorberanordnung;
- Fig. 6: eine perspektivische Ansicht einer Schallabsorberanordnung gemäß einer weiteren Ausführungsform;
- Fig. 7: eine Seitenansicht einer weiteren Ausführungsform der Schallabsorberanordnung;
- Fig. 8: eine Querschnittsansicht einer weiteren Ausführungsform der Schallabsorberanordnung;
- Fig. 9: eine erste vergrößerte Ansicht von Fig. 8;
- Fig. 10: eine zweite vergrößerte Ansicht von Fig. 8; und

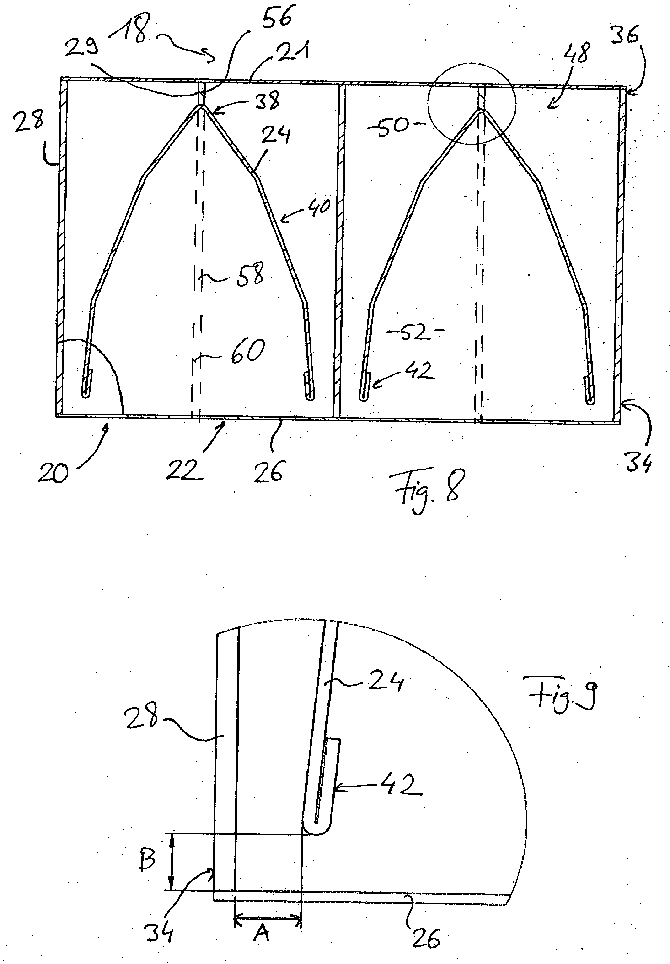

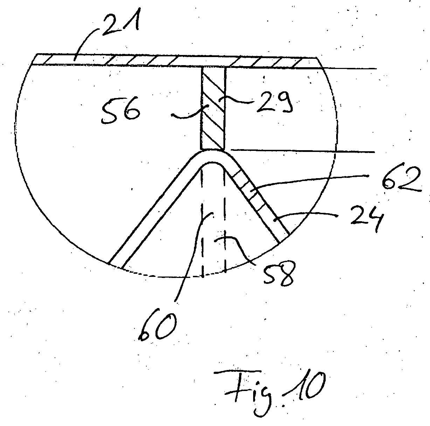

- Fig. 10: eine Explosionsdarstellung der in Fig. 8 gezeigten Ausführungsform der Schallabsorberanordnung

Ein Luftfahrzeug 10 weist einen Rumpf 12 auf, an dem eine Tragfläche 14 befestigt ist. Ein Triebwerk 16 ist an der Tragfläche 14 angebracht. Eine Schallabsorberanordnung 18 ist in einem Abgaskonus des Triebwerks 16 angeordnet. Alternativ kann die Schallabsorberanordnung 18 in einem Triebwerkseinlauf, einem Nebenstromkanal in der gemischten Düse und im Triebwerkskern angeordnet sein. Die Schallabsorberanordnung 18 wird insbesondere dann vorgesehen, wenn eine tieffrequente Absorption des in dem Triebwerk 16 erzeugten Geräusches gewünscht ist.

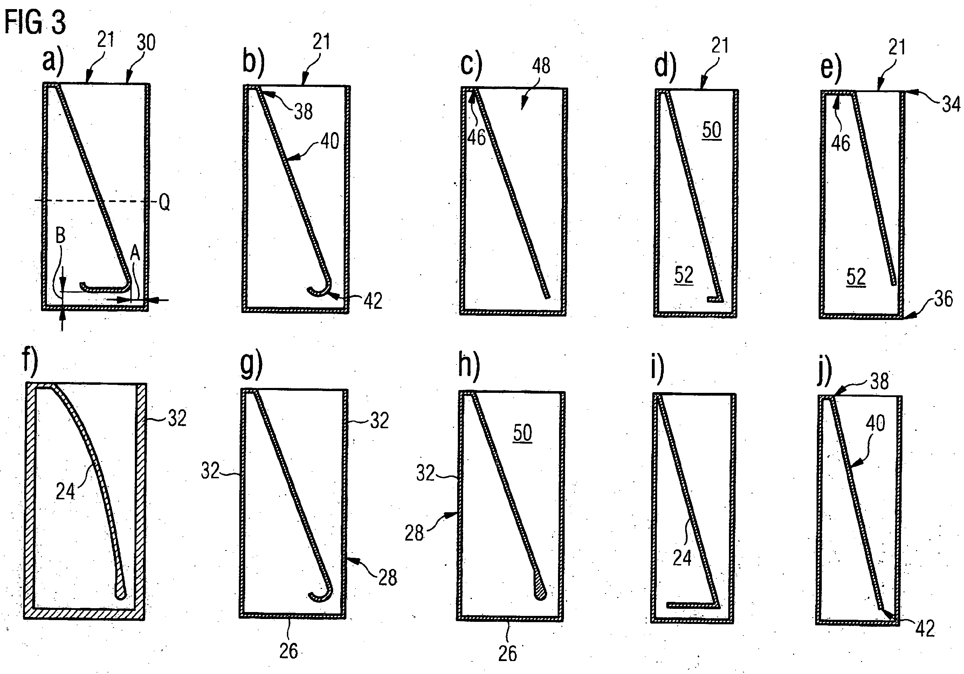

Die Schallabsorberanordnung 18 ist aus mehreren Schallabsorbern 20 aufgebaut. Der Schallabsorber 20 hat einen Grundkörper 22 und eine Zunge 24. Der Grundkörper 22 weist eine Bodenplatte 26, eine Wandung 28 und eine Öffnung 30 auf. Ferner weist der Schallabsorber 20 eine Deckschicht 21 auf, die im Bereich der Öffnung 30 angeordnet ist. Die Deckschicht 21 ist lediglich in den Fig. 3a bis 3j eingezeichnet. Die Deckschicht 21 ist aus einem luftdurchlässigen Material gefertigt und beispielsweise aus einem perforierten Metall, einem µ-perforierten Metall und/oder einem Metallgewebe.

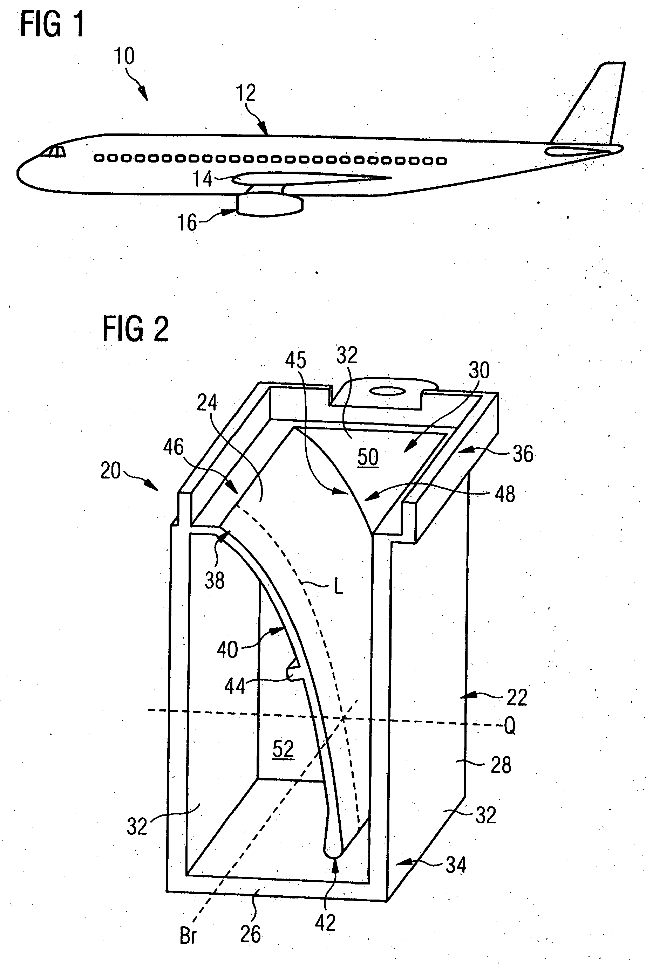

Die Bodenplatte 26 ist den in den Fig. 2 bis 7 gezeigten Ausführungsformen rechteckig. Die Wandung 28 ist aus vier Seitenwänden 32 aufgebaut, die jeweils eine Seite der Bodenplatte 26 berühren. Ein erster Randabschnitt 34 der Wandung umschließt die Bodenplatte 26, während ein zweiter Randabschnitt 36 die Öffnung 30 umgibt.

Die Öffnung 30 und die Bodenplatte 26 sind gegenüberliegend zueinander angeordnet, wobei der Abstand der Öffnung 30 und der Bodenplatte 26 durch die Wandung 28 gegeben ist.

Die Zunge 24 hat ein festes Ende 38, einen Mittenbereich 40 und ein freies Ende 42. Der Mittenbereich 40 ist zwischen dem festen Ende 38 und dem freien Ende 42 angeordnet. Von dem festen Ende 38 zu dem freien Ende 42 verläuft eine Längsrichtung L. Senkrecht dazu sind eine Querrichtung Q und eine Breitenrichtung Br angeordnet. Die Zunge 24 wird durch Streben 44 verstärkt. Die Zunge 24 weist entlang der Längsrichtung L Seitenbereiche 45 auf, die in der Breitenrichtung Br voneinander beabstandete Seitenwände 32 der Wandung 28 berühren. Die Seitenbereiche 45 erstrecken sich über die gesamte Länge der Zunge 24. Die Seitenbereiche 45 sind mit den berührenden Seitenwänden 32 durch Verschweißen luftdicht verbunden.

Die Zunge 24 ist über einen Befestigungsabschnitt 46 an der Wandung 28 befestigt. Das freie Ende 42 ist in der Querrichtung Q von einer Seitenwand 32 der Wandung 28 um den ersten Abstand A beabstandet. Von der Bodenplatte 26 ist das freie Ende 42 in der Längsrichtung L um einen zweiten Abstand B beabstandet. Dies ist insbesondere aus Fig. 3 gut ersichtlich.

In Fig. 2 ist die Zunge 24 entlang der Längsrichtung L in Form eines Parabelasts gebogen, während sie in der Breitenrichtung Br gerade ist. Die Zunge 24 ist aus Blech gefertigt.

Der Grundkörper 22 begrenzt einen Halbraurn 48, der über die Öffnung 30 mit der Umgebung des Schallabsorbers 20 in Verbindung steht. Der Halbraum 48 wird über die Zunge 24 in einen der Öffnung 30 benachbarten ersten Teilraum 50 und einen der Bodenplatte 26 benachbarten zweiten Teilraum 52 geteilt. Die Teilräume 50 und 52 stehen über einen Spalt 54 miteinander in Verbindung. Der Spalt 54 wird durch das freie Ende 42 und den Grundkörper 22 gebildet, das heißt, die Ausdehnung des Spalts 54 wird durch den ersten Abstand A und den zweiten Abstand B bestimmt.

Die Größe des Spalts 54, also auch der erste Abstand A und der zweite Abstand B, werden durch die Form und die Länge der Zunge 24 festgelegt. Insbesondere die Form des freien Endes 42 ist für die Ausdehnung des Spalts 54 maßgeblich. Das freie Ende 42 kann, wie in Fig. 3a, b, d, g und i gezeigt, von der Seitenwand 32, die in der Querrichtung Q dem freien Ende 42 am nächsten ist, das heißt über den ersten Abstand A beabstandet ist, in Querrichtung Q von dieser Seitenwand 32 weggebogen sein. Die Krümmung kann dabei gebogen oder spitzwinklig sein. Alternativ kann das freie Ende 42 keine Krümmung (siehe Fig. 3c, 3e und 3j) aufweisen oder an dessen Ende verdickt sein, so wie dies in Fig. 3f und 3h dargestellt ist.

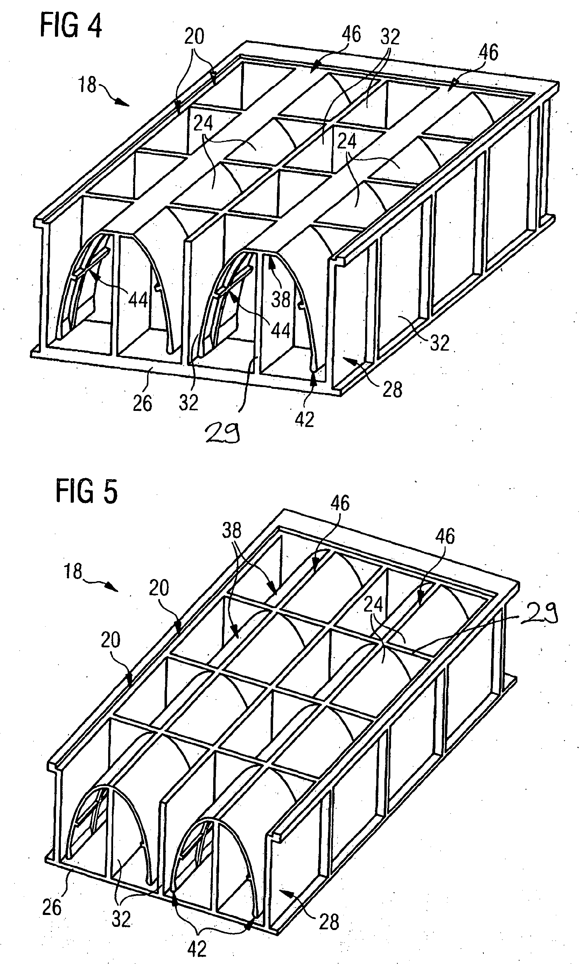

Der Befestigungsabschnitt 46 kann unterschiedlich weit in die Öffnung 30 hineinragen, das heißt die Fläche des Befestigungsabschnitts 46 in der Ebene der Öffnung 30 kann unterschiedlich ausgebildet sein, wie dies in Fig. 3a bis 3j dargestellt ist. Ferner unterscheidet sich die Schallabsorberanordnung 18, die in Fig. 4 und 5 gezeigt sind, in der Größe des Befestigungsabschnitts 46. Wie dies in den Fig. 4 und 5 gezeigt ist, kann der Befestigungsabschnitt 26 dazu verwendet werden, mehrere Zungen 24 zu befestigen. Insbesondere sind die Zungen 24 zweier benachbarter Grundkörper an einem Befestigungsabschnitt 46 angeordnet.

Die in Fig. 4 bis 7 gezeigten Schallabsorberanordnungen 18 weisen Grundkörper 20 auf, deren Wandungen 28 sich gegenseitig berühren. Die Seitenwände 32 der

Wandungen 28, die sich berühren, werden durch eine Seitenwand 32 bereitgestellt, so dass nicht zwei Seitenwände 32 sich berührend angeordnet sind, wodurch Gewicht werden kann. Dies stellt ein Beispiel einer gemeinsamen Wandung 29 dar. Die Wandungen 28 der Schallabsorberanordnung 18 bilden somit eine Wabenstruktur.

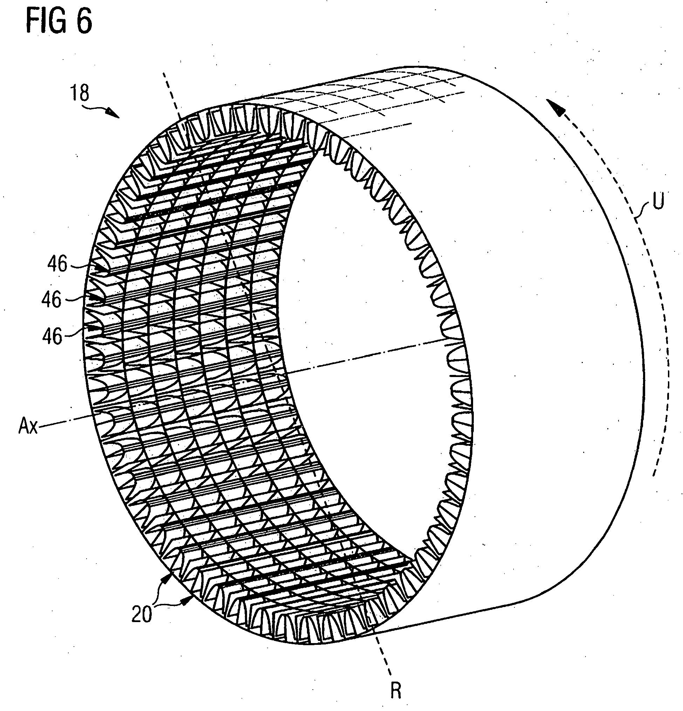

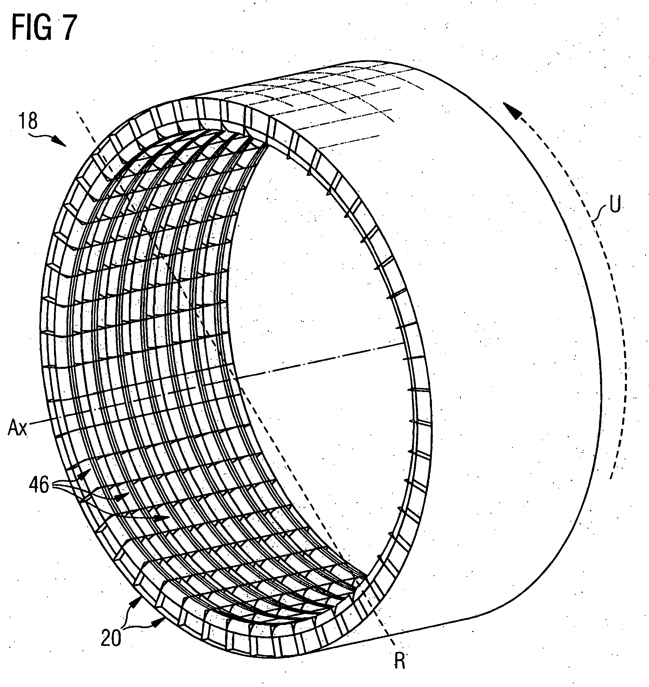

Die Schallabsorberanordnung 18 kann sich in einer Ebene erstrecken, so wie in Fig. 4 und 5 gezeigt, oder eine Ringform aufweisen, so wie in Fig. 6 und 7 gezeigt. Bei der in Fig. 4 und 5 gezeigten Schallabsorberanordnung 18, die sich in einer Ebene erstreckt, sind die Wandungen 28 senkrecht zu der Bodenplatte 26 angeordnet. Dabei kann die Bodenplatte 26 ein einstückiges Element für die einzelnen Schallabsorber 20 sein. Eine senkrechte Anordnung der Wandung 28 in Bezug auf die Bodenplatte 26 bietet den Vorteil, dass die Öffnungen 30 lückenlos die Oberfläche der Schallabsorberanordnung 18 abdecken. Dies ermöglicht einen besonders hohen Wirkungsgrad der Schallabsorberanordnung 18, da besonders viel Schall durch die Öffnungen 30 in den Schallabsorber 20 eindringen kann.

Bei einer ringförmigen Anordnung der Schallabsorberanordnung 18, so wie sie beispielsweise in dem Triebwerk 16 verwendet wird, ist die Wandung 28 unter einem Winkel kleiner als 90° gegenüber der Bodenplatte 26 angeordnet, so dass der Grundkörper 22 konusförmig ist. Dabei sind die Seitenwände 32, die sich in einer Umfangsrichtung U erstrecken, senkrecht zu der Bodenplatte 26 angeordnet, während die Seitenwände 32, die senkrecht zu einer Axialrichtung Ax angeordnet sind, in einem Winkel von weniger als 90° gegenüber der Bodenplatte 26 geneigt.

Die Öffnung 30 der einzelnen Schallabsorber 20 der Schallabsorberanordnung 18 ist in den in Fig. 6 und 7 gezeigten Ausführungsform in der Radialrichtung R nach innen angeordnet. Der Befestigungsabschnitt 46 ist in Fig. 6 in Axialrichtung Ax angeordnet, während der Befestigungsabschnitt 46 in Fig. 7 in Umfangsrichtung U angeordnet ist. An dem Befestigungsabschnitt 46 sind auf beiden Seiten jeweils Zungen 24 befestigt, die in den Raum 48 des Grundkörpers 22 eingeführt sind.

Die in Fig. 8 gezeigte Ausführungsform der Schallabsorberanordnung 18 stimmt mit der in Fig. 5 gezeigten Schallabsorberanordnung 18 bis auf die folgenden Merkmale überein.

Die Zungen 24 zweier benachbarter Schallabsorber 20 sind symmetrisch zur gemeinsamen Wandung 29 angeordnet. Wie insbesondere in Fig. 9 dargestellt ist, sind die Zungen 24 an ihrem freien Ende 42 umgebogen. Die gemeinsame Wandung 29 ersetzt zwei sich berührende Wandungen 28 benachbarter Schallabsorber 20. Die Stelle, an der die Zungen 24 mit der gemeinsamen Wandung 29 verbunden sind, teilt die gemeinsame Wandung 29 in einen ersten, oberen Abschnitt 56 und einen zweiten unteren Abschnitt 58. In dem zweiten Abschnitt 58 ist eine Aussparung 60 vorgesehen, deren Ausdehnung der Ausdehnung der zweiten Aussparung 58 entspricht, sodass die gemeinsame Wandung 29 nur im Bereich des ersten Abschnitts 56 vorgesehen ist. Dies ist in Figs. 8 und 10 durch die gestrichelte Darstellung des zweiten Abschnitts 58 dargestellt. Die zweiten Teilräume 52 zweier benachbarter Schallabsorber 20 sind somit über die Aussparung 60 miteinander verbunden. Sie bilden somit einen gemeinsamen zweiten Teilraum 52.Die Zungen 24 sind in dieser Ausführungsform derart ausgestaltet, dass sie miteinander verbunden sind und ein einstückiges Werkstück bilden. Die Zungen 24 sind an dem ersten Abschnitt 56 angebracht, der in dieser Ausführungsform durch einen Steg realisiert ist. Dies ist vergrößert in Fig. 10 dargestellt. An einer der Zungen 24 der beiden Schallabsorber 20 ist ein Loch 62 vorgesehen, durch welches der erste Teilraum 50 mit dem zweiten Teilraum 52 kommunizieren kann. Das Loch 62 dient zum Abfluss von Kondenswasser.

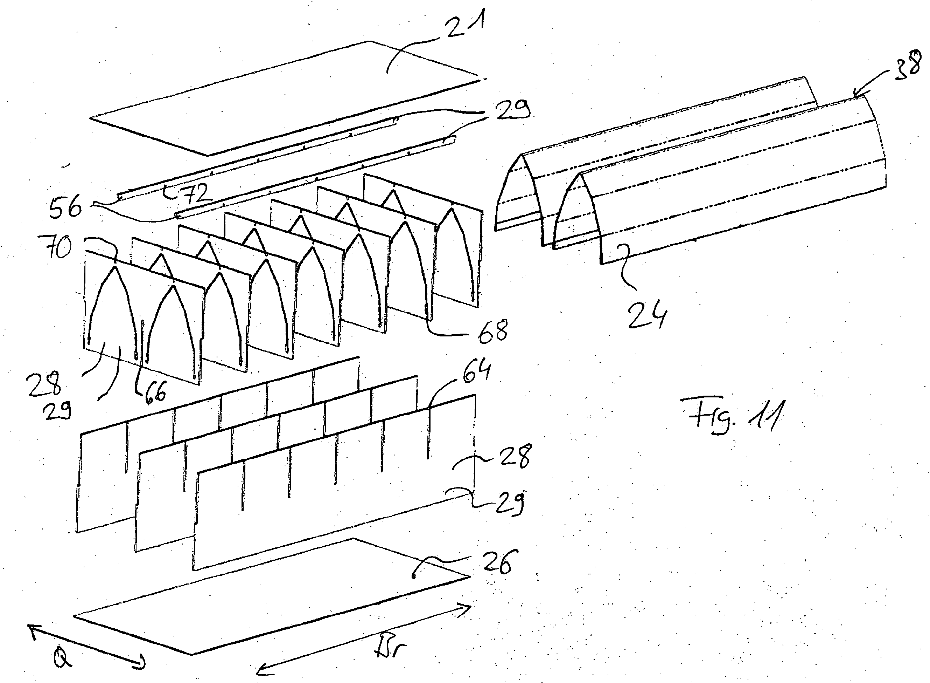

Der Aufbau der Schallabsorberanordnung 18 in der in Fig. 8 gezeigten Ausführungsform ist in Fig. 11 dargestellt. Erste gemeinsame Wandungen 29, welche sich in der breiten Richtung Br erstrecken, weisen erste Einschnitte 64 auf. Zweite gemeinsame Wandungen 29 weisen zweite Einschnitte 66 auf, die komplementär zu den ersten Einschnitten 64 sind. Die zweiten gemeinsamen Wandungen 29 erstrecken sich in eine Querrichtung Q. Die zweiten gemeinsamen Wandungen 29 weisen ferner dritte Einschnitte 72 auf, die die Form des Querschnitts der Zungen 24 aufweisen. Die Zungen 24 sind an dem festen Ende 38 miteinander verbunden und werden in die dritten Einschnitte 72 eingeschoben.

Darüber hinaus weisen die zweiten gemeinsamen Wandungen 29 vierte Einschnitte 72 auf, die komplementär zu fünften Einschnitten 74 der ersten Abschnitte 56 der dritten gemeinsamen Wandungen 29 entsprechen, die als Steg ausgebildet sind. Derart zusammengesetzt werden die ersten, zweiten und dritten gemeinsamen Wandungen 29 auf die Bodenplatte 26 aufgestellt und von der Deckschicht 21 abgedeckt. Anschließend werden die zusammengesteckten Teile miteinander verschweißt.

### Bezugszeichenliste

- 10: Luftfahrzeug
- 12: Rumpf
- 14: Tragfläche
- 16: Triebwerk
- 18: Schallabsorberanordnung
- 20: Schallabsorber
- 21: Deckschicht
- 22: Grundkörper
- 24: Zunge
- 26: Bodenplatte
- 28: Wandung
- 29: gemeinsame Wandung
- 30: Öffnung
- 32: Seitenwand
- 34: Erster Randabschnitt
- 36: Zweiter Randabschnitt
- 38: Festes Ende
- 40: Mittenbereich
- 42: Freies Ende
- 44: Strebe
- 45: Seitenbereiche
- 46: Befestigungsabschnitt
- 48: Halbraum
- 50: Erster Teilraum
- 52: Zweiter Teilraum
- 54: Spalt
- 56: erster Abschnitt
- 58: zweiter Abschnitt
- 60: Aussparung
- 62: Loch
- 64: erster Einschnitt
- 66: zweiter Einschnitt
- 68: dritter Einschnitt
- 70: vierter Einschnitt
- 72: fünfter Einschnitt
- A: Erster Abstand
- B: Zweiter Abstand
- Br: Breitenrichtung
- Ax: Axialrichtung Q Querrichtung
- R: Radialrichtung
- U: Umfangsrichtung

## Patentansprüche

1. Schallabsorber, insbesondere für ein Triebwerk (16) eines Luftfahrzeugs (10), umfassend,
einen Grundkörper (22), der eine Bodenplatte (26), eine die Bodenplatte (26) einfassende Wandung (28) und eine den Eintritt von Luft in den Grundkörper (22) ermöglichende Öffnung (30) aufweist, und
eine Zunge (24), die ein festes Ende (38), ein freies Ende (42) und einen Mittenbereich (40), der zwischen dem festen Ende (38) und dem freien Ende (42) angeordnet ist, aufweist,
wobei die Zunge (24) eine Längsrichtung (L), die sich von dem festen Ende (38) zu dem freien Ende (42) hin erstreckt, eine Breitenrichtung (Br), die sich im Wesentlichen senkrecht zu der Längsrichtung (L) erstreckt, und eine Querrichtung (Q), die sich im Wesentlichen senkrecht zu der Längsrichtung (L) und im Wesentlichen senkrecht zu der Bereitenrichtung (Br) erstreckt, hat,
wobei die Zunge (24) einen Raum des Grundkörpers (22) in einen der Bodenplatte (26) benachbarten Teilraum (52) und einen der Öffnung (30) benachbarten Teilraum (50) teilt,
wobei die beiden Teilräume (50, 52) durch einen Spalt (54) miteinander verbunden sind,
wobei das feste Ende (38) mit der Wandung (28) verbunden ist,
wobei das freie Ende (42) in der Querrichtung (Q) in einem ersten Abstand (A) zu der Wandung (28) und in der Längsrichtung (L) in einem zweiten Abstand (B) zu der Bodenplatte (26) angeordnet ist,
wobei der erste (A) und der zweite Abstand (B) die Größe des Spalts (54) bestimmen und
wobei der Mittenbereich (40) entlang der Breitenrichtung (Br) wenigstens teilsweise gerade verlaufend ausgestaltet ist,
**dadurch gekennzeichnet, dass** zumindest der Mittenbereich (40) zwei sich in der Längsrichtung (L) erstreckende Seitenbereiche (45) aufweist, wobei die Seitenbereiche (45) dicht mit der Wandung (28) verbunden sind.

2. Schallabsorber nach Anspruch 1, **dadurch gekennzeichnet, dass** die Bodenplatte (26) trapezförmig, insbesondere rechteckig, ist.

3. Schallabsorber nach Anspruch 1 oder 2, **dadurch gekennzeichnet, dass**
die Zunge (24) entlang der Längsrichtung (L) gebogen ist, insbesondere in Form eines Parabelasts, einer Exponentialfunktion oder einer Hyperbel, und/oder
dass das freie Ende (42) in der Längsrichtung (L) gekrümmt ist und/oder
dass die Zunge (24) aus Metall, insbesondere Blech, Kohlefaser und/oder keramischen Kompositmaterialien gefertigt ist.

4. Schallabsorber nach einem der Ansprüche 1 bis 3, **gekennzeichnet durch** eine Deckschicht (21), die die Öffnung (30) abdeckt, wobei vorzugsweise die Deckschicht (21) aus einem perforierten Metall und/oder einem µ-perforierten Metall und/oder einem Gewebe gefertigt ist.

5. Schallabsorberanordnung, insbesondere für ein Triebwerk (16) eines Luftfahrzeugs (10), umfassend wenigstens zwei Schällabsorber (20) nach einem der Ansprüche 1 bis 4.

6. Schallabsorberanordnung nach Anspruch 5, **dadurch gekennzeichnet, dass** die wenigstens zwei Schallabsorber (20) in der Querrichtung (Q) und/oder in der Breitenrichtung (Br) hintereinander angeordnet sind, wobei vorzugsweise die Wandung (28) wenigstens bereichsweise mit der Bodenplatte (26) einen Winkel ungleich 90° einschließt.

7. Schallabsorberanordnung nach Anspruch 5 oder 6, **dadurch gekennzeichnet, dass** die Zunge (24) mittels eines Befestigungsabschnitts (46) mit der Wandung (28) verbunden ist, wobei vorzugsweise die Öffnung (30) eine Ebene definiert und wobei weiter vorzugsweise sich der Befestigungsabschnitt (46) in der Ebene der Öffnung (30) über eine Fläche erstreckt, die weniger als 10%, insbesondere weniger als 5%, der Ausdehnung der Öffnung (30) misst.

8. Schallabsorberanordnung nach Anspruch 7, **dadurch gekennzeichnet, dass** an einem Befestigungsabschnitt (46) wenigstens zwei Zungen (24) angeordnet sind, die in wenigstens zwei Grundkörper (22) hineinragen.

9. Schallabsorberanordnung nach einem der Ansprüche 5 bis 8, **dadurch gekennzeichnet, dass** Bereiche von Wandungen (28) zweier Schallabsorber (20), die aneinander angrenzen, durch eine gemeinsame Wandung (28) gebildet werden.

10. Schallabsorberanordnung nach Anspruch 9, **dadurch gekennzeichnet, dass** die Zungen (24) zweier Schallabsorber (20) an der gemeinsamen Wandung (29) angebracht sind, wobei vorzugsweise die gemeinsame Wandung (29) eine Aussparung (60) aufweist.

11. Schallabsorberanordnung nach Anspruch 10, **dadurch gekennzeichnet, dass** die Stelle, an der wenigstens eine der Zungen (24) an der gemeinsamen Wandung (29) angebracht ist, die gemeinsame Wandung (29) in einen ersten Abschnitt (56), der zu der Öffnung (30) benachbart ist, und einen zweiten Abschnitt (58), der zu der Bodenplatte (26) benachbart ist, teilt, wobei der zweite Abschnitt (58) die Aussparung (60) aufweist, wobei vorzugsweise die Aussparung (60) den gesamten zweiten Abschnitt (58) umfasst.

12. Schallabsorberanordnung nach einem der Ansprüche 7 bis 11, **gekennzeichnet durch** eine Vielzahl von Schallabsorbern (20), die in Form eines Rohrs, das eine Radialrichtung (R), eine Umfangsrichtung (U) und eine Axialrichtung (Ax) aufweist, angeordnet sind, wobei weitervorzugsweise die Öffnung (30) der Schallabsorber (20) in der Radialrichtung (R) nach innen weisen und wobei weiter vorzugsweise der Befestigungsabschnitt (46) in Umfangsrichtung (U) oder in Axialrichtung (Ax) angeordnet ist.

13. Schallabsorber nach Anspruch 12, **dadurch gekennzeichnet, dass** zwischen den Grundkörpern (22) entlang der Befestigungsabschnitt (46) der Zunge (24) und/oder entlang der Bodenplatte (26), insbesondere in der Umfangsrichtung (U), eine Drainageöffnung angelegt ist.

14. Triebwerk, insbesondere für ein Luftfahrzeug (10), umfassend einen Schallabsorber (20) nach einem der Ansprüche 1 bis 4 und/oder eine Schallabsorberanordnung (18) nach einem der Ansprüche 5 bis 13.

## Claims

1. A sound absorber, in particular for an engine (16) of an aircraft (10), comprising
a base body (22) having a bottom plate (26), a wall (28) enclosing the bottom plate (26) and an opening (30) enabling the entry of air into the base body (22), and
a tongue (24) having a fixed end (38), a free end (42) and a central portion (40) disposed between the fixed end (38) and the free end (42),
the tongue (24) having a longitudinal direction (L) extending from the fixed end (38) towards the free end (42), a width direction (Br) extending substantially perpendicularly to the longitudinal direction (L), and a transverse direction (Q) extending substantially perpendicularly to the longitudinal direction (L) and substantially perpendicularly to the width direction (Br),
the tongue (24) dividing a space of the base body (22) into a partial space (52) adjacent to the bottom plate (26) and a partial space (50) adjacent to the opening (30),
the two partial spaces (50, 52) being connected to each other via a gap (54), the fixed end (38) being connected to the wall (28),
the free end (42) being disposed at a first distance (A) from the wall (28) in the transverse direction (Q) and at a second distance (B) from the bottom plate (26) in the longitudinal direction (L),
the first (A) and the second (B) distances determining the size of the gap (54) and
the central portion (40) being configured to extend at least partially straight along the width direction (Br), **characterized in that** at least the central portion (40) has two lateral portions (45) extending in the longitudinal direction (L), with the lateral portions (45) being tightly connected with the wall (28).

2. The sound absorber according to claim 1, **characterized in that** the bottom plate (26) is trapezoidal, in particular rectangular.

3. The sound absorber according to claim 1 or 2, **characterized in that**
the tongue (24) is bent along the longitudinal direction (L), in particular in the shape of a parabola branch, an exponential function or a hyperbola, and/or
that the free end (42) is curved in the longitudinal direction (L), and/or
that the tongue (24) is made from metal, in particular sheet metal, carbon fibers and/or ceramic composite materials.

4. The sound absorber according to any one of the claims 1 to 3, **characterized by** a covering layer (21) covering the opening (30), with the covering layer (21) preferably being made from a perforated metal and/or from a µ-perforated metal and/or from a fabric.

5. A sound absorber assembly, in particular for an engine (16) of an aircraft (10), comprising at least two sound absorbers (20) according to any one of the claims 1 to 4.

6. The sound absorber assembly according to claim 5, **characterized in that** the at least two sound absorbers (20) are disposed one behind the other in the transverse direction (Q) and/or the width direction (Br), wherein the wall (28) preferably includes at least in some regions an angle unequal to 90° with the bottom plate (26).

7. The sound absorber assembly according to claim 5 or 6, **characterized in that** the tongue (24) is connected to the wall (28) by means of an attachment portion (46), with the opening (30) preferably defining a plane and, also preferably, with the attachment portion (46) extending in the plane of the opening (30) over a surface area measuring less than 10 %, in particular less than 5 %, of the extent of the opening (30).

8. The sound absorber assembly according to claim 7, **characterized in that** at least two tongues (24), which protrude into at least two base bodies (22), are disposed on one attachment portion (46).

9. The sound absorber assembly according to any one of the claims 5 to 8, **characterized in that** regions of walls (28) of two sound absorbers (20) that abut against each other are formed by a common wall (28).

10. The sound absorber assembly according to claim 9, **characterized in that** the tongues (24) of two sound absorbers (20) are attached to the common wall (29), with the common wall (29) preferably having a cut-out (60).

11. The sound absorber assembly according to claim 10, **characterized in that** the area at which at least one of the tongues (24) is attached to the common wall (29) divides the common wall (29) into a first portion (56) adjacent to the opening (30) and a second portion (58) adjacent to the bottom plate (26), with the second portion (58) having the cut-out (60), the cut-out (60) preferably including the entire second portion (58).

12. The sound absorber assembly according to any one of the claims 7 to 11, **characterized by** a plurality of sound absorbers (20) which are disposed in the form of a pipe having a radial direction (R), a circumferential direction (U) and an axial direction (Ax), with the opening (30) of the sound absorbers (20) also preferably pointing inwards in the radial direction (R), and with the attachment portion (46) also preferably being disposed in the circumferential direction (U) or in the axial direction (Ax).

13. The sound absorber according to claim 12, **characterized in that** a drain opening is installed between the base bodies (22) along the attachment portion (46) of the tongue (24) and/or along the bottom plate (26), particularly in the circumferential direction (U).

14. An engine, in particular for an aircraft (10), comprising
a sound absorber (20) according to any one of the claims 1 to 4 and/or
a sound absorber assembly (18) according to any one of the claims 5 to 13.

## Revendications

1. Absorbeur acoustique, en particulier pour un réacteur (16) d'un avion (10), incluant
un corps de base (22) qui comprend une plaque de fond (26), une paroi (28) qui enchâsse la plaque de fond (26), et une ouverture (30) qui permet l'entrée d'air dans le corps de base (22), et
une languette (24), qui comprend une extrémité fixe (38), une extrémité libre (42) et une zone médiane (40) qui est agencée entre l'extrémité fixe (38) et l'extrémité libre (42),
dans lequel la languette (24) possède une direction longitudinale (L), qui s'étend depuis l'extrémité fixe (38) vers l'extrémité libre (42), une direction en largeur (Br), qui s'étend sensiblement perpendiculairement à la direction longitudinale (L), et une direction transversale (Q), qui s'étend sensiblement perpendiculairement à la direction longitudinale (L) et sensiblement perpendiculairement à la direction en largeur (Br), dans lequel la languette (24) subdivise un volume du corps de base (22) en un volume partiel (52) au voisinage de la plaque de fond (26), et un volume partiel (50) au voisinage de l'ouverture (30),
dans lequel les deux volumes partiels (50, 52) sont reliés l'un à l'autre par une fente (54),
dans lequel l'extrémité fixe (38) est reliée à la paroi (28),
dans lequel l'extrémité libre (42) est agencée, en direction transversale (Q) à une première distance (A) de la paroi (28), et en direction longitudinale (L) à une seconde distance (B) de la plaque de fond (26),
dans lequel la première distance (A) et la seconde distance (B) déterminent la taille de la fente (54), et
dans lequel la zone médiane (40) le long de la direction en largeur (Br) est conçue de manière à s'étendre au moins partiellement en ligne droite,
**caractérisé en ce que**
au moins la zone médiane (40) comprend deux zones latérales (45) s'étendant dans la direction longitudinale (L), dans lequel les zones latérales (45) sont reliées de façon étanche à la paroi (28).

2. Absorbeur acoustique selon la revendication 1, **caractérisé en ce que** la plaque de fond (26) est de forme trapézoïdale, en particulier rectangulaire.

3. Absorbeur acoustique selon la revendication 1 ou 2, **caractérisé en ce que**
la languette (24) est cintrée le long de la direction longitudinale (L), en particulier sous la forme d'une branche parabolique, d'une fonction exponentielle ou d'une hyperbole, et/ou
**en ce que** l'extrémité libre (42) est incurvée dans la direction longitudinale (L), et/ou
**en ce que** la languette (24) est fabriquée en métal, en particulier en tôle, en fibres de carbone, et/ou en matériau composite à base de céramique.

4. Absorbeur acoustique selon l'une des revendications 1 à 3, **caractérisé par** une couche de recouvrement (21), qui recouvre l'ouverture (30), et de préférence la couche de recouvrement (21) est fabriquée en un métal perforé et/ou en un métal microperforé et/ou en un textile.

5. Agencement absorbeur acoustique, en particulier pour un réacteur (16) d'un avion (10), incluant au moins deux absorbeurs acoustiques (20) selon l'une des revendications 1 à 4.

6. Agencement absorbeur acoustique selon la revendication 5, **caractérisé en ce que** lesdits au moins deux absorbeurs acoustiques (20) sont agencés l'un derrière l'autre dans la direction transversale (Q) et/ou dans la direction en largeur (Br), et de préférence la paroi (28) inclut au moins localement avec la plaque de fond (26) un angle qui n'est pas égal à 90°.

7. Agencement absorbeur acoustique selon la revendication 5 ou 6, **caractérisé en ce que** la languette (24) est reliée à la paroi (28) au moyen d'une portion de fixation (46), dans lequel l'ouverture (30) définit de préférence un plan et dans lequel la portion de fixation (46) s'étend en outre de préférence dans le plan de l'ouverture (30) sur une surface qui représente moins de 10 %, en particulier moins de 5 % de l'extension de l'ouverture (30).

8. Agencement absorbeur acoustique selon la revendication 7, **caractérisé en ce que** sur une portion de fixation (46) sont agencées au moins deux languettes (24), qui s'engagent dans au moins deux corps de base (22).

9. Agencement absorbeur acoustique selon l'une des revendications 5 à 8, **caractérisé en ce que** des zones des parois (22) de deux absorbeurs acoustiques (20), qui sont mutuellement adjacents, sont formées par une paroi commune (28).

10. Agencement absorbeur acoustique selon la revendication 9, **caractérisé en ce que** les languettes (24) de deux absorbeurs acoustiques (20) sont rapportées sur la paroi commune (29), et la paroi commune (29) comporte de préférence un évidement (60).

11. Agencement absorbeur acoustique selon la revendication 10, **caractérisé en ce que** l'emplacement auquel est rapporté ladite au moins une languette (24) sur la paroi commune (29) partage la paroi commune (29) en un premier tronçon (56), qui est voisin de l'ouverture (30), et en un second tronçon (58), qui est voisin de la plaque de fond (26), dans lequel le second tronçon (58) comporte l'évidement (60), et de préférence l'évidement (60) inclut la totalité du second tronçon (58).

12. Agencement absorbeur acoustique selon l'une des revendications 7 à 11, **caractérisé par** une pluralité d'absorbeurs acoustiques (20), qui sont agencés sous la forme d'un tube, qui présente une direction radiale (R), une direction périphérique (U) et une direction axiale (Ax), et l'ouverture (30) de l'absorbeur acoustique (20) fait en outre de préférence face dans la direction radiale (R) et la portion de fixation (46) est en outre de préférence agencée en direction périphérique (U) ou en direction axiale (Ax).

13. Absorbeur acoustique selon la revendication 12, **caractérisé en ce qu'**une ouverture de drainage est ménagée entre les corps de base (22) le long de la portion de fixation (46) de la languette (24) et/ou le long de la plaque de fond (26), en particulier dans la direction périphérique (U).

14. Réacteur, en particulier pour un avion (10), incluant un absorbeur acoustique (20) selon l'une des revendications 1 à 4 et/ou un agencement absorbeur acoustique (18) selon l'une des revendications 5 à 13.
